# EUROPEAN PATENT SPECIFICATION

(11) **EP 4 239 856 B1**
(45) Date of publication and mention of the grant of the patent: **03.09.2025**
(21) Application number: 23159234.6
(22) Date of filing: 28.02.2023
(51) Int. Cl.: H02K 1/20, H02K 5/20, H02K 9/193

(54) **ELECTRIC MOTOR FOR VEHICLE, AND VEHICLE**
ELEKTROMOTOR FÜR FAHRZEUG UND FAHRZEUG
MOTEUR ÉLECTRIQUE POUR VÉHICULE ET VÉHICULE

(30) Priority: 02.03.2022 CN 202210198723
(43) Date of publication of application: 06.09.2023
(73) Proprietor: XPT EDS (Hefei) Co., Ltd., Hefei City, Anhui 230601 (CN)
(72) Inventor: XU, Shilong, Shanghai (CN); LI, Jiqiang, Shanghai (CN); TANG, Zhengyu, Shanghai (CN); LI, Jiebao, Shanghai (CN); WANG, Di, Shanghai (CN); YU, Zhixin, Shanghai (CN); BI, Lu, Shanghai (CN); WANG, Wei, Shanghai (CN); LIU, Huaiyuan, Shanghai (CN); LI, Beibei, Shanghai (CN)
(74) Representative: Vossius & Partner Patentanwälte Rechtsanwälte mbB

(56) References cited:
- WO-A1-2021/217294
- CH-A- 317 647
- CN-A- 109 936 232
- CN-A- 112 615 445
- CN-A- 113 824 224
- CN-A- 113 852 223
- CN-U- 215 733 714
- DE-A1- 102015 215 762
- JP-A- 2006 033 989
- JP-A- 2010 124 619
- JP-A- 2011 217 434
- US-A1- 2012 001 504
- US-A1- 2012 080 964
- US-A1- 2018 054 095
- US-A1- 2021 347 245
- US-A1- 2022 045 576

## Description

### Technical Field

The disclosure relates to the technical field of vehicle accessories, and specifically provides an electric motor for a vehicle and a vehicle.

### Background Art

With the rapid development of vehicle technology, related technical requirements for driving electric motors are becoming increasingly stringent, and the future development of electric motors will trend towards high speed, high power density, and high integration. For electric motors, this development trend puts forward higher cooling requirements and requires a more efficient cooling manner. For example, published US patent applications US 2022/0045576 A1, US 2018/0054095 A1 and US 2012/0001504 A1 each disclose a motor with axial cooling passages provided in a stator and extending along an axial direction of the stator. Published Chinese patent applications CN 112 615 445 A and CN 113 824 224 A each disclose a similar motor for a vehicle integrated with axial cooling passages in a stator.

In existing electric motors for vehicles, a spray oil ring is usually used to spray on an end portion of a winding and an outer surface of an iron core so as to cool the electric motor. For example, CN 215 733 714 U and US 2012/0080964 A1 disclose cooling channels formed between an outer surface of a stator core and a housing or a sleeve so that coolant can flow along the outer surface of the stator core.

However, the existing electric motor for a vehicle usually has the problems that during spraying and cooling of the outer surface of the iron core, a heat dissipation area of the outer surface of the iron core is small, and a convective heat transfer coefficient of a heat dissipation surface is small, and is greatly affected by a direction of gravity.

Accordingly, there is a need in the art for a novel electric motor for a vehicle and a vehicle to solve the foregoing problem.

### Summary

To solve the foregoing problems in the prior art, the invention is set out in the appended set of claims.

It can be understood by those skilled in the art that in the technical solution of the disclosure, the electric motor comprises a stator and an oil intake pipeline, wherein the stator comprises a plurality of first laminations, each of the first laminations is configured into the shape of a circular ring and is provided with oil passage holes, the plurality of first laminations are stacked in an axial direction of the first laminations, the plurality of stacked first laminations jointly enclose a cylindrical structure, the oil passage holes in the plurality of first laminations are in communication with each other to form cooling oil passages, and the oil intake pipeline is in communication with the cooling oil passages; and the cooling oil passages are arranged to enable the cooling oil to flow in an axial direction of the stator, and also enable the cooling oil to flow between a plurality of cooling oil passages in a circumferential direction of the stator. The stator further comprises a second lamination provided with a pressure relief hole formed in the second lamination, the pressure relief hole has a cross-sectional area greater than that of the oil passage hole, and at least one second lamination is arranged between two first laminations, so that the cooling oil flowing from the oil passage holes located above the second lamination passes through the pressure relief hole, and then flows into the oil passage holes located below the second lamination.

According to the disclosure, the cooling oil passages in communication with each other are formed, and the oil intake pipeline is in communication with the cooling oil passages, so that the cooling oil can enter the cooling oil passages and flow inside the cooling oil passages in the axial direction of the stator, so as to cool the interior of the stator formed by stacking the plurality of first laminations in the axial direction of the first laminations. Further, in the electric motor for a vehicle according to the disclosure, the cooling oil passages are further arranged to enable the cooling oil to flow in the axial direction of the stator, and also enable the cooling oil to flow between a plurality of cooling oil passages in the circumferential direction of the stator, so as to increase a flow path of the cooling oil inside the stator. This, compared with a plurality of independent cooling oil passages, further enables the oil temperature to be more balanced, has a better cooling effect, and also provides a longer flow path and more routes, thereby further increasing a heat exchange area inside the stator, and improving the cooling effect on the interior of the stator. By means of the foregoing solution, the disclosure solves the problems usually existing in the existing electric motor for a vehicle that during spraying and cooling of the outer surface of the iron core, a heat dissipation area of the outer surface of the iron core is small, and a convective heat transfer coefficient of a heat dissipation surface is small, and is greatly affected by a direction of gravity.

### Brief Description of the Drawings

An electric motor for a vehicle and a vehicle according to the disclosure is described below with reference to the accompanying drawings. In the accompanying drawings:
FIG. 1 is a schematic structural diagram of an internal oil path after cooling oil rings and a stator are assembled;
FIG. 2 is a schematic structural diagram of the assembly of the cooling oil rings and the stator;
FIG. 3 is a schematic structural diagram of a stator formed by stacking a plurality of first laminations;
FIG. 4 is a schematic structural diagram of a cross-section, taken in a direction M-M, of a stacked arrangement of first laminations, with a cross-section of each oil passage hole being a rectangular hole;
FIG. 5 is a schematic structural diagram of a cross-section, taken in a direction M-M, of a stacked arrangement of first laminations, with disturbance protrusions arranged on side walls of oil passage holes;
FIG. 6 is a schematic structural diagram of a cross-section, taken in a direction M-M, of a stacked arrangement in which a second lamination is arranged between two first laminations.
FIG. 7 is a schematic structural diagram of a cross-section, taken in a direction M-M, of a stacked arrangement of first laminations, with an axis of each oil passage hole being not parallel to a thickness direction of each first lamination;
FIG. 8 is a schematic structural diagram of a cross-section, taken in a direction M-M, of stacked first laminations, with a cross-section of each oil passage hole being a trapezoidal hole;
FIG. 9 is a schematic structural diagram of a cross-section, taken in a direction M-M, of stacked first laminations, with a cross-section of each oil passage hole being a stepped hole; and
FIG. 10 is a schematic structural diagram of a cooling oil ring.

### List of reference signs:

1 - Stator; 11 - First lamination; 111 - Oil passage hole; 112 - Cooling oil passage; 113 - Disturbance protrusion; 12 - Second lamination; 121 - Pressure relief hole;
2 - Oil intake pipeline;
3 - Cooling oil ring; 31 - Oil spray hole; 32 - Cooling oil inlet; 33 - Radial sealing ring; 34 - Axial sealing ring; 35 - First end; 36 - Second end; 37 - Oil guide rib;
4 - Housing.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. Those skilled in the art can make adjustments according to requirements, so as to adapt to specific application scenarios.

It should be noted that, in the description of the disclosure, the terms that indicate the directions or positional relationships, such as "upper", "lower", "inner" and "outer", are based on the directions or positional relationships shown in the accompanying drawings, are merely for ease of description instead of indicating or implying that the device or element must have a particular orientation and be constructed and operated in a particular orientation, and therefore, should not be construed as limiting the disclosure. In addition, the terms "first" and "second" are used for descriptive purposes only, and cannot be construed as indicating or implying relative importance.

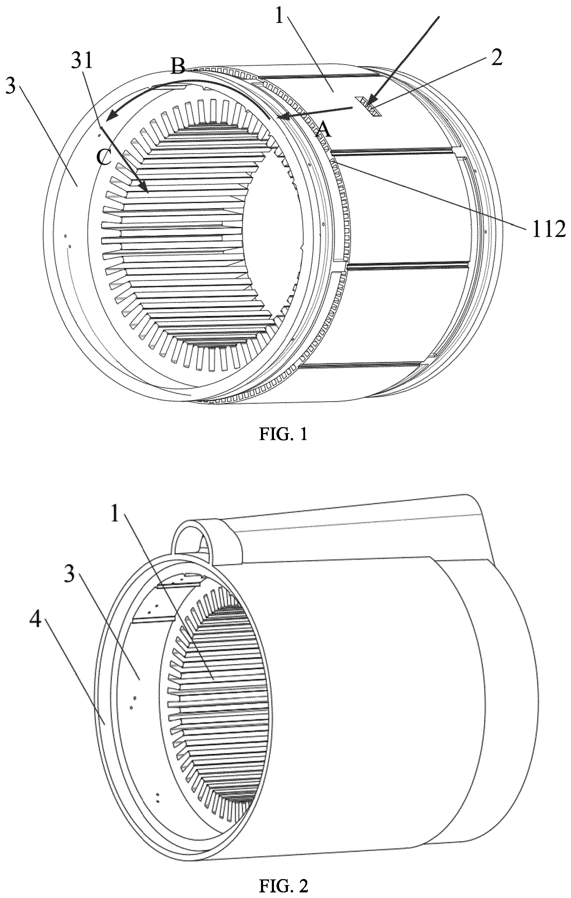

Referring to FIGS. 1 to 4 first, an electric motor for a vehicle according to the disclosure is described.

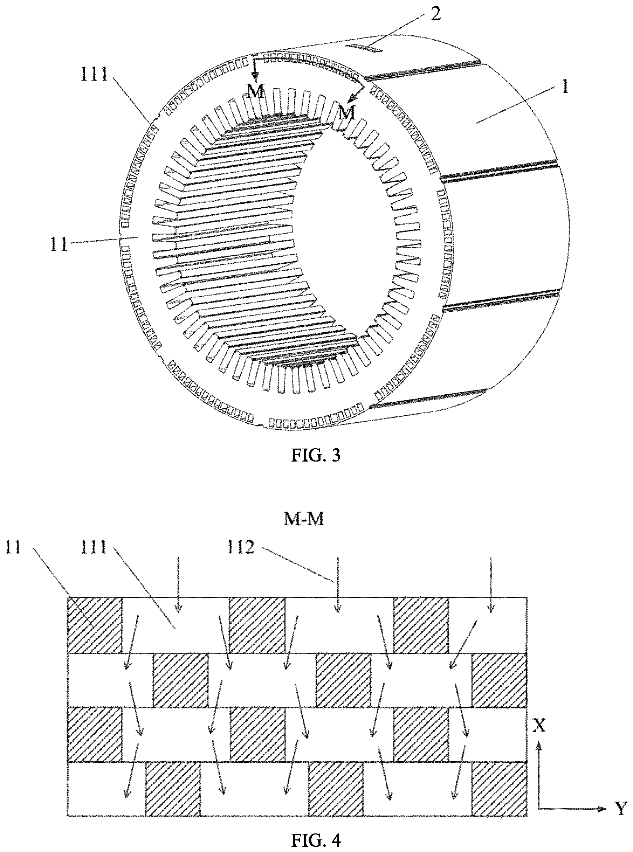

As shown in FIGS. 1 to 4, to solve the problems usually existing in an existing electric motor for a vehicle that during spraying and cooling of an outer surface of an iron core, a heat dissipation area of the outer surface of the iron core is small, and a convective heat transfer coefficient of a heat dissipation surface is small, and is greatly affected by a direction of gravity, an electric motor for a vehicle according to the disclosure comprises a stator 1 and an oil intake pipeline 2. The stator 1 comprises a plurality of first laminations 11, each of the first laminations 11 is configured into the shape of a circular ring, the first laminations 11 are provided with oil passage holes 111, the plurality of first laminations 11 are stacked in an axial direction of the first laminations 11, the plurality of stacked first laminations 11 jointly enclose a cylindrical structure, the oil passage holes 111 in the plurality of first laminations 11 are in communication with each other to form cooling oil passages 112, and the oil intake pipeline 2 is in communication with the cooling oil passages 112. The cooling oil passages 112 are arranged to enable the cooling oil to flow in an axial direction of the stator 1, and also enable the cooling oil to flow between a plurality of cooling oil passages 112 in a circumferential direction of the stator 1. It should be noted that, in this embodiment, an oil path in the cooling oil passage 112 is a section of oil path that is marked A in FIG. 1. The axial direction of the stator 1 refers to the X direction in FIG. 4, and the circumferential direction of the stator 1 refers to the Y direction in FIG. 4.

By means of the foregoing arrangement, according to the disclosure, the cooling oil passages 112 in communication with each other are formed, and the oil intake pipeline 2 is in communication with the cooling oil passages 112, so that the cooling oil can enter the cooling oil passages 112 and flow inside the cooling oil passages 112 in the axial direction of the stator 1, so as to cool the interior of the stator 1 formed by stacking the plurality of first laminations 11 in the axial direction of the first laminations 11. Further, in the electric motor for a vehicle according to the disclosure, the cooling oil passages 112 are further arranged to enable the cooling oil to flow in the axial direction of the stator 1, and also enable the cooling oil to flow between a plurality of cooling oil passages 112 in the circumferential direction of the stator 1, so as to increase a flow path of the cooling oil inside the stator 1. This, compared with a plurality of independent cooling oil passages, further enables the oil temperature to be more balanced, has a better cooling effect, and also provides a longer flow path and more routes, thereby further increasing a heat exchange area inside the stator 1, and improving the cooling effect on the interior of the stator 1. This solves the problems usually existing in the existing electric motor for a vehicle that during spraying and cooling of the outer surface of the iron core, a heat dissipation area of the outer surface of the iron core is small, and a convective heat transfer coefficient of a heat dissipation surface is small, and is greatly affected by a direction of gravity.

In addition, in this embodiment, the number of oil passage holes 111 formed in the first laminations 11 may be set according to different cooling requirements of the electric motor.

Further referring to FIGS. 1 to 10, the electric motor for a vehicle according to the disclosure is described in detail below.

As shown in FIGS. 3 and 4, in a possible implementation, the plurality of first laminations 11 are stacked in such a way that oil passage holes 111 in two adjacent first laminations 11 are in a staggered alignment. By way of example, for a plurality of same first laminations 11, it is possible that one lamination at an angle of 0° and one lamination at an angle of rotation of 5° are stacked alternately, or that ten laminations at an angle of 0° and ten laminations at an angle of rotation of 5° are stacked alternately, provided that the cooling oil passages 112 according to any implementation shown in FIGS. 4 to 9 can be finally presented.

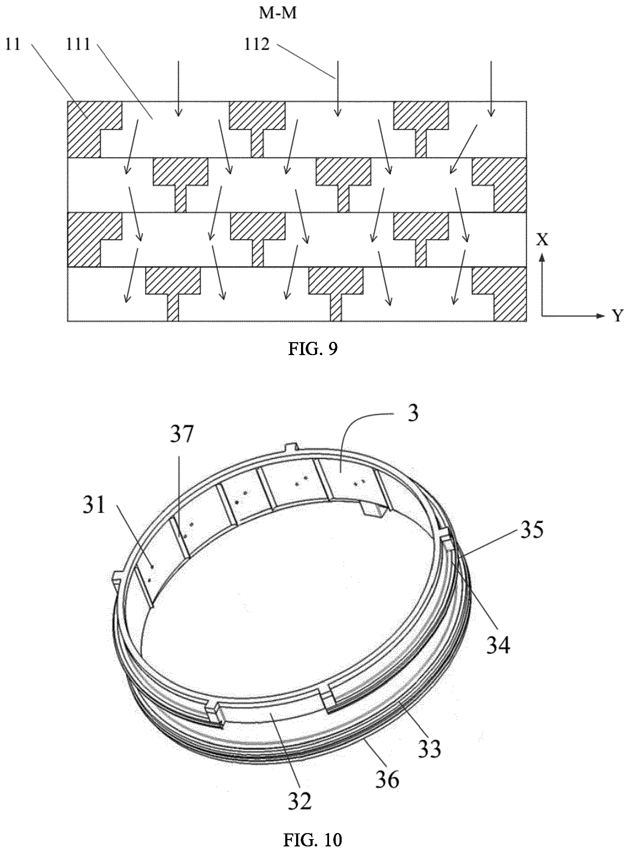

It should be noted that in this embodiment, the arrangement positions and the number of oil passage holes 111 in the first laminations 11 may be set according to actual requirements, to meet the design requirements that the cooling oil passages 112 according to any implementation shown in FIGS. 4 and 9 can be presented.

By means of the foregoing arrangement, in the electric motor for a vehicle in this embodiment, the plurality of first laminations 11 are stacked in such a way that oil passage holes 111 in two adjacent first laminations 11 are in a staggered alignment, to form staggered cooling oil passages 112. This increases the flow path of the cooling oil in the cooling oil passages 112 and increases the heat exchange area inside the stator 1, so as to improve the cooling effect on the interior of the stator 1. In addition, the plurality of first laminations 11 are stacked in such a way that oil passage holes 111 in two adjacent first laminations 11 are in a staggered alignment, to enable the cooling oil to flow in the axial direction of the stator 1, and also enable the cooling oil to flow between the plurality of cooling oil passages 112 in the circumferential direction of the stator 1, so as to further improve the cooling effect on the interior of the stator 1.

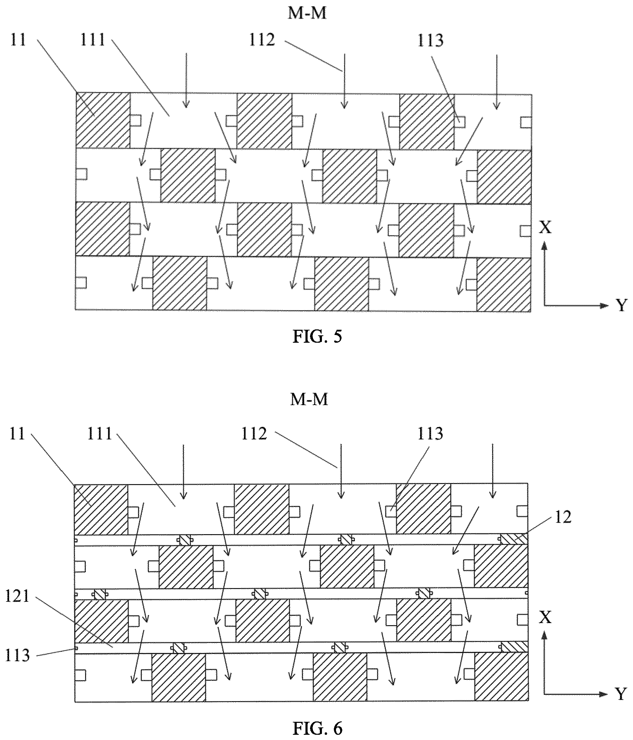

As shown in FIG. 6, the stator 1 further comprises a second lamination 12, the second lamination 12 is provided with a pressure relief hole 121, the pressure relief hole 121 has a diameter greater than that of the oil passage hole 111, and at least one second lamination 12 is arranged between two first laminations 11, so that the cooling oil flowing from the oil passage holes 111 located above the second lamination 12 passes through the pressure relief hole 121, and then flows into the oil passage holes 111 located below the second lamination 12.

Through the foregoing arrangement, in the electric motor for a vehicle in this embodiment, further, the second lamination 12 is arranged in the stator 1, the second lamination 12 is provided with a pressure relief hole 121, the pressure relief hole 121 has a diameter greater than that of the oil passage hole 111, and at least one second lamination 12 is arranged between two first laminations 11. Since the pressure relief hole 121 formed in the second lamination 12 has a diameter greater than that of each oil passage hole 111 formed in the first laminations 11, after flowing out of the oil passage holes 111 above the second lamination 12, the cooling oil flows into the pressure relief hole 121 formed in the second lamination 12, so that the pressure is reduced, and then during the flowing of the cooling oil from the pressure relief hole 121 into the oil passage holes 111 below the second lamination 12, the pressure relief hole 121 can relieve the pressure of the cooling oil to enable the cooling oil to flow more smoothly in the cooling oil passages 112. By means of the flow guide function of the pressure relief hole 121, the pressure drop of the cooling oil during the flow is reduced, so as to further improve the cooling effect on the interior of the stator 1 through the flow of the cooling oil in the cooling oil passages 112.

As shown in FIG. 5, in order to further improve the cooling effect on the stator 1, in this embodiment, side walls of the oil passage holes 111 are further provided with disturbance protrusions 113.

In this embodiment, the side walls of the oil passage holes 111 are provided with the disturbance protrusions 113, so that during the flow of the cooling oil in the cooling oil passages 112, a heat dissipation area inside the stator 1 is increased, and the flow disturbance effect of the cooling oil is enhanced, thereby further improving the heat dissipation capability inside the stator 1.

Further, as shown in FIG. 5, in order to further improve the cooling effect on the stator 1, in this embodiment, a side wall of the pressure relief hole 121 is also provided with a disturbance protrusion 113.

Through the foregoing arrangement, in this embodiment, the side wall of the pressure relief hole 121 is provided with the disturbance protrusion 113, so that during the flow of the cooling oil through the pressure relief hole 121, a heat exchange area inside the stator 1 can be further increased under the effect of the disturbance protrusion 113 on the side wall of the pressure relief hole 121, and the disturbance effect of the cooling oil is enhanced, thereby further improving the cooling effect inside the stator 1.

As shown in FIG. 4, in a possible implementation, a cross-section of each oil passage hole 111 is a rectangular hole, and the cross-section in the disclosure is a cross-section taken along M-M.

In this embodiment, on the one hand, by configuring the cross-section of the oil passage hole 111 as a rectangular hole, necessary structural features are provided to enable the cooling oil to flow in the cooling oil passages 112, and on the other hand, by configuring the cross-section of the oil passage hole 111 as a rectangular hole, the machining of the oil passage hole 111 is easy to operate, and machining costs are reduced.

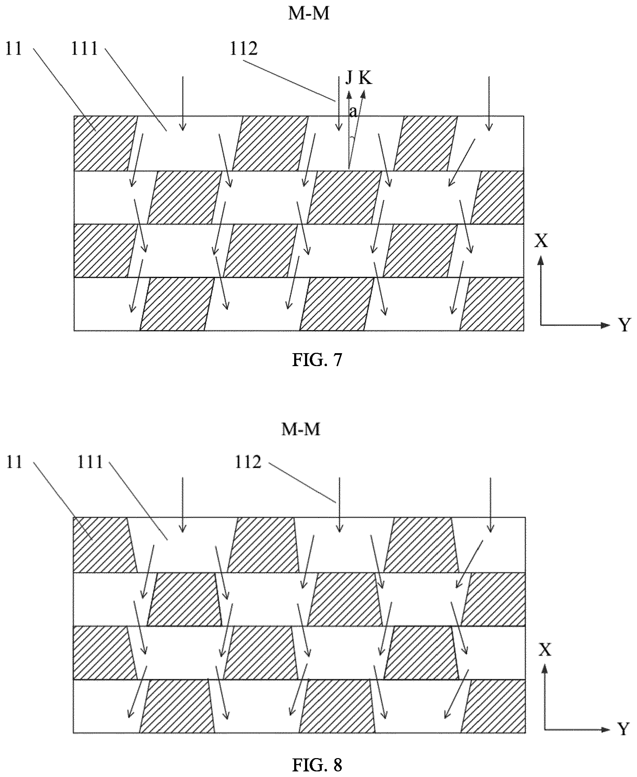

As shown in FIG. 7, in order to improve the cooling effect inside the stator 1, in this embodiment, an axis of each oil passage hole 111 is not parallel to a thickness direction of each first lamination 11.

It should be noted that in this embodiment, the axis of each oil passage hole 111 being not parallel to the thickness direction of each first lamination 11 means that the axis of the oil passage hole 111 forms an angle a with respect to the thickness direction of the first lamination 11, as shown in FIG. 7. The thickness direction of the first lamination 11 is a direction J in FIG. 7, and the axial direction of the oil passage hole 111 is a direction K in FIG. 7.

Through the foregoing arrangement, in the stator 1 of this embodiment, each oil passage hole 111 is arranged in such a way that the axis of the oil passage hole 111 is not parallel to the thickness direction of the first lamination 11, so that the flow path of the cooling oil is increased when the cooling oil flows through the oil passage hole 111, thereby increasing the heat exchange area inside the stator 1 and improving the cooling effect inside the stator 1.

As shown in FIG. 8, in a possible implementation, a cross-section of each oil passage hole 111 is a trapezoidal hole.

Through the foregoing arrangement, the cross-section of each oil passage hole 111 is configured as a trapezoidal hole, so that when the cooling oil flows through the oil passage hole 111, the flow path of the cooling oil is increased, thereby increasing the heat exchange area inside the stator 1 to improve the heat dissipation effect inside the stator 1. In addition, with the cross-section of the oil passage hole 111 being configured as a trapezoidal hole, the aperture sizes of the oil passage hole 111 in the axial direction of the oil passage hole 111 are different, and thus the flow rate of the cooling oil is constantly changed during flowing in the oil passage hole 111, so as to further improve the cooling effect inside the stator 1.

It should be noted that in this embodiment, when the cross-section of each oil passage hole 111 is set to be trapezoidal, the stacking form of two adjacent first laminations 11 is as shown in FIG. 8. As shown in FIG. 9, in order to further increase the heat exchange area inside the stator 1 and improve the cooling effect inside the stator 1, in this embodiment, a cross-section of each oil passage hole 111 is a stepped hole.

In this embodiment, the cross-section of each oil passage hole 111 is configured as a stepped hole, so that when the cooling oil flows through the stepped hole as the cross-section, the cooling oil flows down along a side wall of the stepped hole as the cross-section, and under the action of the step-shaped side wall, the flow path of the cooling oil in the oil passage hole 111 is increased, so as to increase the heat exchange area inside the stator 1, so that the cooling effect on the stator 1 can be further improved.

It should be noted that in this embodiment, the number of steps in the stepped hole as the cross-section may be set according to actual cooling requirements for the electric motor, to meet requirements for vehicle performance. The more steps there are, the longer the flow path of the cooling oil in the oil passage hole 111, the larger the heat exchange area inside the stator 1, the better the heat dissipation effect inside the stator 1, and the better the cooling effect on the stator 1. However, as the number of steps increases, the machining difficulty of the oil passage hole 111 is greater, and the machining cost is higher.

It should be noted that, as shown in FIGS. 4 to 9, in this embodiment, the axial direction of the stator 1 refers to the X direction in FIGS. 4 to 9, and the circumferential direction of the stator 1 refers to the Y direction in FIGS. 4 to 9.

As shown in FIG. 1, in a possible implementation, the electric motor for a vehicle is further provided with two cooling oil rings 3, the cooling oil rings 3 are respectively arranged at two ends of the stator 1, and the oil intake pipeline 2, the cooling oil passages 112 and the hollow columns 3 are sequentially in communication with one another.

In this embodiment, each cooling oil ring 3 is provided with an oil spray hole 31 for spraying on an end portion of a winding of the electric motor, and a cooling oil inlet 32.

Through the foregoing arrangement, in the electric motor for a vehicle in this embodiment, the cooling oil rings 3 are respectively arranged at the two ends of the stator 1, and the oil intake pipeline 2, the cooling oil passages 112 and the cooling oil rings 3 are sequentially in communication with one another, so that the cooling oil can enter the cooling oil passages 112 inside the iron core of the stator 1 through the oil intake pipeline 2. Therefore, an oil path is formed in which the cooling oil enters the cooling oil passages 112 from the oil intake pipeline 2, then flows out from the cooling oil passages 112 and enters the cooling oil ring 3 through the cooling oil inlet 32, and is finally sprayed from the oil spray holes 31, in directions shown by the arrows in FIG. 1. A section A of the oil path in FIG. 1 is a flow oil path of the cooling oil in the cooling oil passage 112, a section B of the oil path in FIG. 1 is a flow oil path of the cooling oil in the cooling oil ring 3, and a section C of the oil path in FIG. 1 is a flow oil path of the cooling oil sprayed from the oil spray holes 31.

In the electric motor for a vehicle in this embodiment, under the action of an internal pressure of each cooling oil ring 3, the cooling oil is sprayed from the oil spray holes 31 formed in the side wall of the cooling oil ring 3, so that the cooling oil flows in the oil path to provide a spray effect on the end portion of the winding of the electric motor, and then meet requirements for cooling the end portion of the winding of the electric motor by the cooling oil rings 3.

In addition, as shown in FIGS. 1, 2 and 10, the inner side wall of each cooling oil ring 3 is further provided with an oil guide rib 37, and the oil guide rib 37 is configured to be able to guide the cooling oil sprayed from the oil spray holes 31 to one side of the cooling oil ring 3, so as to enable the cooling oil sprayed from the oil spray holes 31 to fully cool the interior of the electric motor, thereby preventing the cooling oil from flowing along the outer wall of the cooling oil ring 3, and then further improving the cooling effect of the cooling oil on the end portion of the winding of the electric motor. The arrangement of the oil guide rib 37 on the inner side wall of the cooling oil ring 3 further enables the cooling oil sprayed from the oil spray holes 31 to flow to the end portion of the winding of the electric motor under the flow guide function of the oil guide rib 37 at a low flow rate or at a low temperature (that is, when the cooling oil is not enough for spraying on the end portion of the winding of the electric motor only under the spray effect of the oil spray holes 31), so as to improve the cooling effect on the end portion of the winding of the electric motor.

As shown in FIG. 2, in a possible implementation, the electric motor for a vehicle further comprises a housing 4, and the housing 4 is sleeved outside the stator 1 and the cooling oil rings 3 such that the stator 1 is fixedly connected to the cooling oil rings 3.

Through the foregoing arrangement, in this embodiment, the housing 4 is sleeved outside the stator 1 and the cooling oil rings 3, so as to meet the requirement of fixedly connecting the stator 1 to the cooling oil rings 3.

As shown in FIGS. 1, 2 and 10, in order to enhance the sealing between each cooling oil ring 3 and the housing 4 of the electric motor, in this embodiment, further, a second end 36 of the cooling oil ring 3 is sleeved with a radial sealing ring 33 for hermetical connection to the housing 4 of the electric motor to achieve a radial sealing effect.

In addition, as shown in FIGS. 1, 2 and 10, in order to enhance the sealing between each cooling oil ring 3 and the stator 1, in this embodiment, further, an axial sealing ring 34 for hermetical connection to the stator 1 axially abuts against the first end 35 of the cooling oil ring 3, and the cooling oil ring 3 is axially pressed against the stator 1 by means of the axial sealing ring 34 to achieve an axial sealing effect.

In conclusion, in the electric motor for a vehicle according to the disclosure, the cooling oil passages 112 in communication with each other are formed, and the oil intake pipeline 2 is in communication with the cooling oil passages 112, so that the cooling oil can enter the cooling oil passages 112 and flow inside the cooling oil passages 112 in the axial direction of the stator 1, so as to cool the interior of the stator 1 formed by stacking the plurality of first laminations 11 in the axial direction of the first laminations 11. Further, in the electric motor for a vehicle according to the disclosure, the cooling oil passages 112 are further arranged to enable the cooling oil to flow in the axial direction of the stator 1, and also enable the cooling oil to flow between a plurality of cooling oil passages 112 in the circumferential direction of the stator 1, so as to increase the flow path of the cooling oil inside the stator 1, thereby further increasing the heat exchange area inside the stator 1, and then further improving the cooling effect on the interior of the stator 1.

It should be noted that the foregoing implementations are only used to explain the principles of the invention claimed by the appended claims, and are not intended to limit the scope of protection of the claimed invention. Those skilled in the art can adjust the foregoing structures without departing from the principle of the claimed invention, so that the claimed invention is applicable to more specific application scenarios.

In addition, the disclosure further provides a vehicle provided with an electric motor for a vehicle according to any one of the foregoing implementations.

## Claims

1. An electric motor for a vehicle, wherein the electric motor comprises a stator (1) and an oil intake pipeline (2), wherein the stator (1) comprises a plurality of first laminations (11), each of the first laminations (11) is configured into the shape of a circular ring and is provided with oil passage holes (111), the plurality of first laminations (11) are stacked in an axial direction of the first laminations (11), the plurality of stacked first laminations (11) jointly enclose a cylindrical structure,
wherein the oil passage holes (111) in the plurality of first laminations (11) are in communication with each other to form cooling oil passages (112), and the oil intake pipeline (2) is in communication with the cooling oil passages (112);
wherein the cooling oil passages (112) are arranged to enable the cooling oil to flow in an axial direction of the stator (1), and also enable the cooling oil to flow between a plurality of cooling oil passages (112) in a circumferential direction of the stator (1); and
wherein the stator further comprises a second lamination (12) provided with a pressure relief hole (121) formed in the second lamination (12), the pressure relief hole (121) has a cross-sectional area greater than that of the oil passage hole (111), and at least one second lamination (12) is arranged between two first laminations (11), so that the cooling oil flowing from the oil passage holes (111) located axially upstream the second lamination (12) passes through the pressure relief hole (121), and then flows into the oil passage holes (111) located axially downstream the second lamination (12).

2. The electric motor for a vehicle according to claim 1, **characterized in that** side walls of the oil passage holes (111) and/or the pressure relief hole (121) are further provided with disturbance protrusions (113).

3. The electric motor for a vehicle according to any one of claims 1 to 2, **characterized in that** the electric motor is further provided with two cooling oil rings (3) respectively arranged at two ends of the stator (1), and the oil intake pipeline (2), the cooling oil passages (112) and the hollow columns are sequentially in communication with one another.

4. The electric motor for a vehicle according to any one of claims 1 to 3, **characterized in that** the plurality of first laminations (11) are stacked in such a way that oil passage holes (111) in two adjacent first laminations (11) are in a staggered alignment.

5. The electric motor for a vehicle according to any one of claims 1 to 4, **characterized in that** an axis of each of the oil passage holes (111) forms an angle with respect to the axial direction of the first laminations.

6. The electric motor for a vehicle according to any one of claims 1 to 4, **characterized in that** each of the oil passage holes (111) has a cross section in the plane developed in the circumferential direction of the stator (1) and the cross section is a rectangular hole.

7. The electric motor for a vehicle according to any one of claims 1 to 4, **characterized in that** each of the oil passage holes (111) has a cross section in the plane developed in the circumferential direction of the stator (1) and the cross section is a trapezoidal hole.

8. The electric motor for a vehicle according to any one of claims 1 to 4, **characterized in that** each of the oil passage holes (111) has a cross section in the plane developed in the circumferential direction and the cross section is a stepped hole.

9. A vehicle, **characterized by** comprising an electric motor for a vehicle of any one of claims 1 to 8.

## Patentansprüche

1. Elektromotor für ein Fahrzeug, wobei der Elektromotor einen Stator (1) und eine Ölansaugleitung (2) umfasst, wobei der Stator (1) eine Mehrzahl von ersten Blechen (11) umfasst, wobei jedes der ersten Bleche (11) in der Form eines kreisförmigen Rings ausgestaltet ist und mit Ölkanalöffnungen (111) versehen ist, wobei die Mehrzahl von ersten Blechen (11) in einer axialen Richtung der ersten Bleche (11) gestapelt sind, wobei die Mehrzahl von gestapelten ersten Blechen (11) gemeinsam eine zylindrische Struktur umschließen,
wobei die Ölkanalöffnungen (111) in der Mehrzahl von ersten Blechen (11) miteinander in Verbindung stehen, um Kühlölkanäle (112) zu bilden, und die Ölansaugleitung (2) mit den Kühlölkanälen (112) in Verbindung steht;
wobei die Kühlölkanäle (112) so angeordnet sind, dass ermöglicht wird, dass das Kühlöl in eine axiale Richtung des Stators (1) strömt, und zudem ermöglicht wird, dass das Kühlöl in einer Umfangsrichtung des Stators (1) zwischen einer Mehrzahl von Kühlölkanälen (112) strömt; und
wobei der Stator ferner ein zweites Blech (12) umfasst, das mit einer Druckentlastungsöffnung (121) versehen ist, die in dem zweiten Blech (12) gebildet ist, wobei die Druckentlastungsöffnung (121) eine Querschnittsfläche aufweist, die größer als die der Ölkanalöffnung (111) ist, und wobei mindestens ein zweites Blech (12) zwischen zwei ersten Blechen (11) so angeordnet ist, dass das Kühlöl, das aus den Ölkanalöffnungen (111) strömt, die sich axial stromaufwärts des zweiten Blechs (12) befinden, durch die Druckentlastungsöffnung (121) hindurchgeht und dann in die Ölkanalöffnungen (111) strömt, die sich axial stromabwärts des zweiten Blechs (12) befinden.

2. Elektromotor für ein Fahrzeug nach Anspruch 1, **dadurch gekennzeichnet, dass** Seitenwände der Ölkanalöffnungen (111) und/oder der Druckentlastungsöffnung (121) ferner mit Störungsvorsprüngen (113) versehen sind.

3. Elektromotor für ein Fahrzeug nach einem der Ansprüche 1 bis 2, **dadurch gekennzeichnet, dass** der Elektromotor ferner mit zwei Kühlölringen (3) versehen ist, die jeweils an zwei Enden des Stators (1) angeordnet sind, und die Ölansaugleitung (2), die Kühlölkanäle (112) und die hohlen Säulen nacheinander miteinander in Verbindung stehen.

4. Elektromotor für ein Fahrzeug nach einem der Ansprüche 1 bis 3, **dadurch gekennzeichnet, dass** die Mehrzahl von ersten Blechen (11) derart gestapelt sind, dass Ölkanalöffnungen (111) in zwei angrenzenden ersten Blechen (11) in einer versetzten Ausrichtung liegen.

5. Elektromotor für ein Fahrzeug nach einem der Ansprüche 1 bis 4, **dadurch gekennzeichnet, dass** eine Achse jeder der Ölkanalöffnungen (111) einen Winkel in Bezug auf die axiale Richtung der ersten Bleche bildet.

6. Elektromotor für ein Fahrzeug nach einem der Ansprüche 1 bis 4, **dadurch gekennzeichnet, dass** jede der Ölkanalöffnungen (111) einen Querschnitt in der Ebene aufweist, die in der Umfangsrichtung des Stators (1) ausgebildet ist, und der Querschnitt eine rechteckige Öffnung ist.

7. Elektromotor für ein Fahrzeug nach einem der Ansprüche 1 bis 4, **dadurch gekennzeichnet, dass** jede der Ölkanalöffnungen (111) einen Querschnitt in der Ebene aufweist, die in der Umfangsrichtung des Stators (1) ausgebildet ist, und der Querschnitt eine trapezförmige Öffnung ist.

8. Elektromotor für ein Fahrzeug nach einem der Ansprüche 1 bis 4, **dadurch gekennzeichnet, dass** jede der Ölkanalöffnungen (111) einen Querschnitt in der Ebene aufweist, die in der Umfangsrichtung ausgebildet ist, und der Querschnitt eine abgestufte Öffnung ist.

9. Fahrzeug, **dadurch gekennzeichnet, dass** es einen Elektromotor für ein Fahrzeug nach einem der Ansprüche 1 bis 8 umfasst.

## Revendications

1. Moteur électrique pour un véhicule, le moteur électrique comprenant un stator (1) et un conduit d'admission d'huile (2), le stator (1) comprenant une pluralité de premières tôles (11), chacune des premières tôles (11) étant conçue sous la forme d'une bague circulaire et étant pourvue de trous de passage d'huile (111), la pluralité de premières tôles (11) étant empilées dans une direction axiale des premières tôles (11), la pluralité de premières tôles (11) empilées définissant conjointement une structure cylindrique,
les trous de passage d'huile (111) dans la pluralité de premières tôles (11) communiquant les uns avec les autres de façon à former des passages à huile de refroidissement (112), le conduit d'admission d'huile (2) communiquant avec les passages à huile de refroidissement (112) ;
les passages à huile de refroidissement (112) étant conçus de façon à permettre à l'huile de refroidissement de s'écouler dans une direction axiale du stator (1), et également à permettre à l'huile de refroidissement de s'écouler entre une pluralité de passages à huile de refroidissement (112) dans une direction circonférentielle du stator (1) ; et
le stator comprenant, en outre, une seconde tôle (12) pourvue d'un trou de décompression (121) formé dans la seconde tôle (12), le trou de décompression (121) présentant une aire en section transversale supérieure à celle du trou de passage d'huile (111), et au moins une seconde tôle (12) étant placée entre deux premières tôles (11), de telle sorte que l'huile de refroidissement s'écoulant depuis les trous de passage d'huile (111) situés axialement en amont relativement à la seconde tôle (12) traverse le trou de décompression (121), puis s'écoule dans les trous de passage d'huile (111) situés axialement en aval relativement à la seconde tôle (12).

2. Moteur électrique pour un véhicule selon la revendication 1, **caractérisé en ce que** des parois latérales des trous de passage d'huile (111) et/ou du trou de décompression (121) sont pourvues, en outre, de saillies de perturbation (113).

3. Moteur électrique pour un véhicule selon l'une ou l'autre des revendications 1 et 2, **caractérisé en ce que** le moteur électrique est pourvu, en outre, de deux bagues à huile de refroidissement (3) respectivement placées à deux extrémités du stator (1), et le conduit d'amission d'huile (2), les passages à huile de refroidissement (112) et les colonnes creuses communiquent successivement les uns avec les autres.

4. Moteur électrique pour un véhicule selon l'une quelconque des revendications 1 à 3, **caractérisé en ce que** la pluralité de première tôles (11) sont empilées de telle sorte que des trous de passage d'huile (111) dans deux premières tôles (11) adjacentes soient décalés.

5. Moteur électrique pour un véhicule selon l'une quelconque des revendications 1 à 4, **caractérisé en ce qu'**un axe de chacun des trous de passage d'huile (111) forme un angle avec la direction axiale des premières tôles.

6. Moteur électrique pour un véhicule selon l'une quelconque des revendications 1 à 4, **caractérisé en ce que** chacun des trous de passage d'huile (111) a une section transversale dans le plan développé dans la direction circonférentielle du stator (1) et la section transversale est un trou rectangulaire.

7. Moteur électrique pour un véhicule selon l'une quelconque des revendications 1 à 4, **caractérisé en ce que** chacun des trous de passage d'huile (111) a une section transversale dans le plan développé dans la direction circonférentielle du stator (1) et la section transversale est un trou trapézoïdal.

8. Moteur électrique pour un véhicule selon l'une quelconque des revendications 1 à 4, **caractérisé en ce que** chacun des trous de passage d'huile (111) a une section transversale dans le plan développé dans la direction circonférentielle et la section transversale est un trou étagé.

9. Véhicule, **caractérisé en ce qu'**il comprend un moteur électrique pour un véhicule selon l'une quelconque des revendications 1 à 8.
